(19) Europäisches Patentamt
European Patent Office
Office européen des brevets

(11) **EP 1 200 671 B1**

(12) **FASCICULE DE BREVET EUROPEEN**

(45) Date de publication et mention
de la délivrance du brevet:
**20.07.2005 Bulletin 2005/29**

(51) Int Cl.⁷: **D07B 1/06**

(21) Numéro de dépôt: **00943886.2**

(86) Numéro de dépôt international:
**PCT/EP2000/005882**

(22) Date de dépôt: **26.06.2000**

(87) Numéro de publication internationale:
**WO 2001/000922 (04.01.2001 Gazette 2001/01)**

(54) **CABLE D'ACIER MULTICOUCHES POUR CARCASSE DE PNEUMATIQUE**

MEHRLAGIGES STAHLSEIL FÜR DIE KARKASSE EINES LUFTREIFENS

MULTILAYER STEEL CORD FOR TYRE CASING

(84) Etats contractants désignés:
**AT BE CH CY DE DK ES FI FR GB GR IE IT LI LU MC NL PT SE**

(30) Priorité: **29.06.1999 FR 9908446**

(43) Date de publication de la demande:
**02.05.2002 Bulletin 2002/18**

(73) Titulaires:
• **Société de Technologie Michelin
63040 Clermont-Ferrand Cedex 09 (FR)**
• **Michelin Recherche et Technique S.A.
1763 Granges-Paccot (CH)**

(72) Inventeurs:
• **CORDONNIER, François-Jacques
F-63100 Clermont-Ferrand (FR)**
• **DOMINGO, Alain
F-63190 Orleat (FR)**

(74) Mandataire: **Ribière, Joel
Michelin & Cie
Service SGD/LG/PI-LAD
63040 Clermont-Ferrand Cedex 09 (FR)**

(56) Documents cités:
**EP-A- 0 719 889      WO-A-98/41682**

## Description

La présente invention est relative aux câbles d'acier ("*steel cords*") utilisables pour le renforcement d'articles en caoutchouc tels que des pneumatiques. Elle se rapporte plus particulièrement aux câbles dits "à couches" utilisables pour le renforcement de l'armature de carcasse de pneumatiques de véhicules industriels tels que des pneumatiques "Poids-lourd".

Les câbles d'acier pour pneumatiques sont en règle générale constitués de fils en acier perlitique (ou ferrito-perlitique) au carbone, désigné ci-après "acier au carbone", dont la teneur en carbone est généralement comprise entre 0,2% et 1,2%, le diamètre de ces fils étant le plus souvent compris entre 0,10 et 0,40 mm (millimètre). On exige de ces fils une très haute résistance à la traction, en général supérieure à 2000 MPa, de préférence supérieure à 2500 MPa, obtenue grâce au durcissement structural intervenant lors de la phase d'écrouissage des fils. Ces fils sont ensuite assemblés sous forme de câbles ou torons, ce qui nécessite des aciers utilisés qu'ils aient aussi une ductilité en torsion suffisante pour supporter les diverses opérations de câblage.

Pour le renforcement des armatures de carcasse de pneumatiques Poids-lourd, on utilise le plus souvent aujourd'hui des câbles d'acier dits "à couches" ("*layered cords*") ou "multicouches" constitués d'une âme centrale et d'une ou plusieurs couches de fils concentriques disposées autour de cette âme. Ces câbles à couches, qui privilégient des longueurs de contact plus importantes entre les fils, sont préférés aux câbles plus anciens dits "à torons" ("*strand cords*") en raison d'une part d'une plus grande compacité, d'autre part d'une sensibilité moindre à l'usure par fretting. Parmi les câbles à couches, on distingue notamment, de manière connue, les câbles à structure compacte et les câbles à couches tubulaires ou cylindriques.

Les câbles à couches les plus répandus dans les carcasses de pneumatiques Poids-lourd sont des câbles de formule (L+M) ou (L+M+N), les derniers étant généralement destinés aux plus gros pneumatiques. Ces câbles sont formés dé manière connue d'une âme de L fil(s) entourée d'au moins une couche de M fils éventuellement elle-même entourée d'une couche externe de N fils, avec en général L variant de 1 à 4, M variant de 3 à 12, N variant de 8 à 20 le cas échéant, l'ensemble pouvant être éventuellement fretté par un fil de frette externe enroulé en hélice autour de la dernière couche.

De tels câbles à couches utilisables pour le renforcement de carcasse de pneumatiques, notamment de pneumatiques Poids-lourd, ont été décrits dans un très grand nombre de publications. On se reportera notamment aux documents US-A-3 922 841 ; US-A-4 158 946 ; US-A-4 488 587 ; EP-À-0 168 858 ; EP-A-0 176 139 ou US-A-4 651 513 ; EP-A-0 194 011 ; EP-A-0 260 556 ou US-A-4 756 151 ; EP-A-0 362 570 ; EP-A-0 497 612 ou US-A-5 285 836 ; EP-A-0 568 271 ; EP-A-0 648 891 ; EP-A-0 669 421 ou US-A-5 595 057 ; EP-A-0 709 236 ou US-A-5 836 145 ; EP-A-0 719 889 ou US-A-5 697 204 ; EP-A-0 744 490 ou US-A-5 806 296 ; EP-A-0 779 390 ou US-A-5 802 829 ; EP-A-0 834 613 ; WO98/41682 ; RD (*Research Disclosure*) N°34054, août 1992, pp. 624-33 ; RD N°34370, novembre 1992, pp. 857-59.

Pour remplir leur fonction de renforcement des carcasses de pneumatiques, les câbles à couches doivent tout d'abord présenter une bonne flexibilité et une endurance élevée en flexion, ce qui implique notamment que leurs fils présentent un diamètre relativement faible, normalement inférieur à 0,28 mm, de préférence inférieur à 0,25 mm, plus petit en particulier que celui des fils utilisés dans les câbles conventionnels pour les armatures de sommet des pneumatiques.

Ces câbles à couches sont d'autre part soumis à des contraintes importantes lors du roulage des pneumatiques, notamment à des flexions ou variations de courbure répétées induisant au niveau des fils des frottements, notamment par suite des contacts entre couches adjacentes, et donc de l'usure, ainsi que de la fatigue ; ils doivent donc présenter une haute résistance aux phénomènes dits de "fatigue-fretting".

Il est important enfin qu'ils soient imprégnés autant que possible par le caoutchouc, que cette matière pénètre dans tous les espaces entre les fils constituant les câbles. En effet, si cette pénétration est insuffisante, il se forme alors des canaux vides, le long des câbles, et les agents corrosifs, par exemple l'eau, susceptibles de pénétrer dans les pneumatiques par exemple à la suite de coupures, cheminent le long de ces canaux jusque dans la carcasse du pneumatique. La présence de cette humidité joue un rôle important en provoquant de la corrosion et en accélérant les processus de dégradation ci-dessus (phénomènes dits de "fatigue-corrosion"), par rapport à une utilisation en atmosphère sèche.

Tous ces phénomènes de fatigue que l'on regroupe généralement sous le terme générique de "fatigue-fretting-corrosion" sont à l'origine d'une dégénérescence progressive des propriétés mécaniques des câbles et peuvent affecter, pour les conditions de roulage les plus sévères, la durée de vie de ces derniers.

Afin d'améliorer l'endurance des câbles à couches dans les carcasses de pneumatiques Poids-lourd, où de manière connue les sollicitations en flexion répétée peuvent être particulièrement sévères, on a proposé depuis longtemps de modifier leur construction afin d'augmenter notamment leur pénétrabilité par le caoutchouc, et ainsi limiter les risques dus à la corrosion et la fatigue-corrosion.

Ont été par exemple proposés ou décrits des câbles à couches de construction (3+9) ou (3+9+15) constitués d'une âme de 3 fils entourée d'une première couche de 9 fils et le cas échéant d'une seconde couche de 15 fils, comme décrit par exemple dans EP-A-0 168 858, EP-A-0 176 139, EP-A-0 497 612, EP-A-0 669 421, EP-A-0 709 236; EP-A-0 744 490, EP-A-0 779 390, le diamètre des fils de l'âme étant ou non supérieur à celui des fils des autres couches. Ces câbles ne sont pas pénétrables jusqu'à coeur à cause de la présence d'un canal ou capillaire au centre des trois fils d'âme, qui reste vide après imprégnation par le caoutchouc, et donc propice à la propagation de milieux corrosifs tels que l'eau.

La publication RD N°34370 décrit quant à elle des câbles de structure [1+6+12], du type compacts ou du type à couches tubulaires concentriques, constitués d'une âme formée d'un seul fil, entourée d'une couche intermédiaire de 6 fils elle-même entourée d'une couche externe de 12 fils. La pénétrabilité par le caoutchouc peut être améliorée en utilisant des diamètres de fils différents d'une couche à l'autre, voire à l'intérieur d'une même couche. Des câbles de construction [1+6+12] dont la pénétrabilité est améliorée grâce à un choix approprié des diamètres des fils, notamment à l'utilisation d'un fil d'âme de plus gros diamètre, ont été également décrits, par exemple dans EP-A-0 648 891 ou WO98/41682.

Pour améliorer encore, par rapport à ces câbles conventionnels, la pénétration du caoutchouc à l'intérieur du câble, on a proposé des câbles multicouches avec une âme centrale entourée d'au moins deux couches concentriques, par exemple des câbles de formule [1+6+N], notamment [1+6+11], dont la couche externe est insaturée (incomplète), assurant ainsi une meilleure pénétrabilité par le caoutchouc (voir par exemple EP-A-0 719 889, WO98/41682). Les constructions proposées permettent la suppression du fil de frette, grâce à une meilleure pénétration du caoutchouc à travers la couche externe et l'auto-frettage qui en résulte ; l'expérience montre toutefois que ces câbles ne sont pas pénétrés jusqu'à coeur par le caoutchouc, en tout cas pas encore de manière optimale.

En outre, il doit être noté qu'une amélioration de la pénétrabilité par le caoutchouc n'est pas suffisante pour garantir un niveau de performance suffisant. Lorsqu'ils sont utilisés pour le renforcement de carcasses de pneumatiques, les câbles doivent non seulement résister à la corrosion mais aussi satisfaire un grand nombre de critères, parfois contradictoires, en particulier de ténacité, résistance au fretting, adhésion élevée au caoutchouc, uniformité, flexibilité, endurance en flexion ou traction répétée, stabilité sous forte flexion, etc.

Ainsi, pour toutes les raisons exposées précédemment, et malgré les différentes améliorations récentes qui ont pu être apportées ici ou là sur tel ou tel critère déterminé, les meilleurs câbles utilisés aujourd'hui dans les armatures de carcasse de pneumatiques Poids-lourds restent limités à un petit nombre de câbles à couches de structure fort conventionnelle, du type compacts ou à couches cylindriques, avec une couche externe saturée (complète) ; il s'agit essentiellement des câbles de constructions [3+9], [3+9+15] ou [1+6+12] tels que décrits précédemment.

Or, la Demanderesse a trouvé lors de ses recherches un câble à couches nouveau, du type à couche externe insaturée, qui de manière inattendue améliore encore la performance globale des meilleurs câbles à couches connus pour le renforcement des carcasses de pneumatiques Poids-lourd. Ce câble de l'invention présente, grâce à une architecture spécifique, non seulement une excellente pénétrabilité par le caoutchouc, limitant les problèmes de corrosion, mais encore des propriétés d'endurance en fatigue-fretting qui sont notablement améliorées par rapport aux câbles de l'art antérieur. La longévité des pneumatiques Poids-lourd et celle de leurs armatures de carcasse en sont ainsi très sensiblement améliorées.

En conséquence, un premier objet de l'invention est un câble multicouches à couche externe insaturée, utilisable comme élément de renforcement d'une armature de carcasse de pneumatique ou comme élément de renforcement d'articles ou de produits semi-finis en matière plastique et/ou en caoutchouc, comportant une âme de diamètre $d_0$, entourée d'une couche intermédiaire de six ou sept fils (M = 6 ou 7) de diamètre $d_1$ enroulés ensemble en hélice selon un pas $p_1$, cette couche intermédiaire étant elle-même entourée d'une couche externe de N fils de diamètre $d_2$ enroulés ensemble en hélice selon un pas $p_2$, N étant inférieur de 1 à 3 au nombre maximal $N_{max}$ de fils enroulables en une couche autour de la couche intermédiaire, les fils des couches intermédiaire et externe étant enroulés dans le même sens de torsion, ce câble étant caractérisé en ce qu'il présente les caractéristiques suivantes ($d_0$, $d_1$, $d_2$, $p_1$ et $p_2$ en mm):

- (i) $0,14 < d_0 < 0,28$ ;
- (ii) $0,12 < d_1 < 0,25$ ;
- (iii) $0,12 < d_2 < 0,25$ ;
- (iv) pour M = 6 : $1,10 < (d_0 / d_1) < 1,40$ ;
  pour M = 7 : $1,40 < (d_0 / d_1) < 1,70$ ;
- (v) $5 \pi (d_0 + d_1) < p_1 < p_2 < 5 \pi (d_0 + 2d_1 + d_2)$.

L'invention concerne également l'utilisation d'un câble conforme à l'invention pour le renforcement d'articles ou de produits semi-finis en matière plastique et/ou en caoutchouc, par exemple des nappes, des tuyaux, des courroies, des bandes transporteuses, des pneumatiques, plus particulièrement des pneumatiques destinés à des véhicules industriels utilisant habituellement une armature de carcasse métallique.

Le câble de l'invention est tout particulièrement destiné à être utilisé comme élément de renforcement d'une armature de carcasse de pneumatique destiné à des véhicules industriels choisis parmi camionnettes, "Poids-lourds" - i.e., métro, bus, engins de transport routier (camions, tracteurs, remorques), véhicules hors-la-route - , engins agricoles ou de génie civil, avions, autres véhicules de transport ou de manutention.

L'invention concerne en outre ces articles ou produits semi-finis en matière plastique et/ou en caoutchouc eux-mêmes lorsqu'ils sont renforcés par un câble conforme à l'invention, en particulier les pneumatiques destinés aux véhicules industriels cités ci-dessus, plus particulièrement les pneumatiques Poids-lourds, ainsi que 1es tissus composites comportant une matrice de composition de caoutchouc renforcée d'un câble selon l'invention, utilisables comme nappe d'armature de carcasse de tels pneumatiques Poids-lourd.

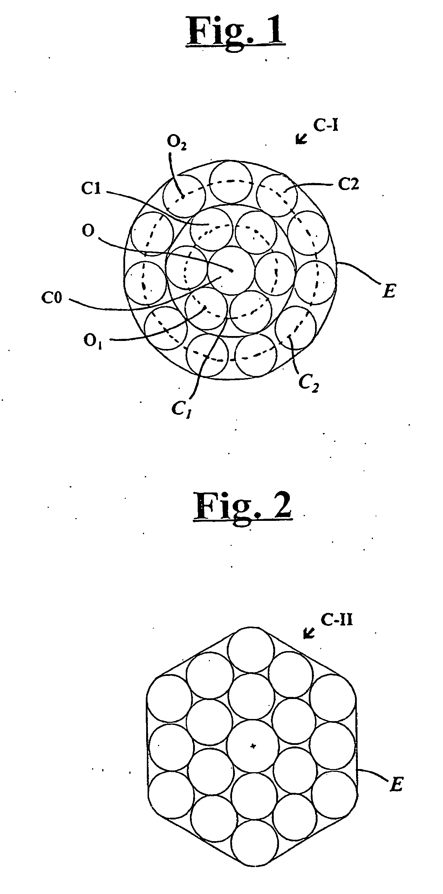

L'invention ainsi que ses avantages seront aisément compris à la lumière de la description et des exemples de réalisation qui suivent, ainsi que des figures 1 à 3 relatives à ces exemples qui schématisent, respectivement:

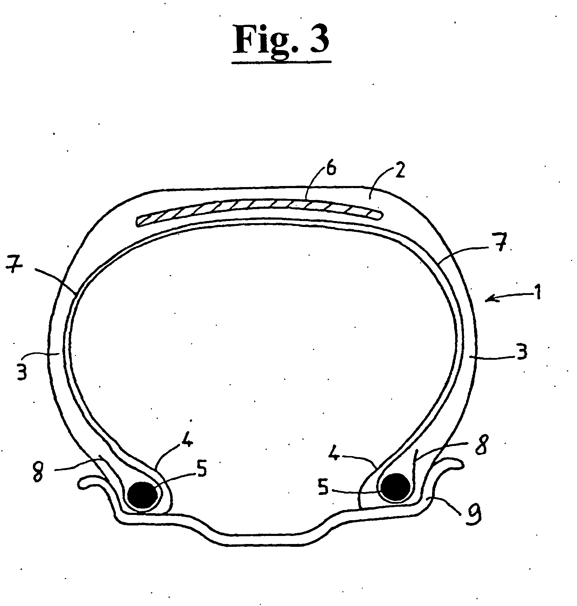

- une coupe transversale d'un câble de structure [1+6+11] conforme à l'invention (figure 1);
- une coupe transversale d'un câble de structure [1+6+12] de l'art antérieur (figure 2);
- une coupe radiale d'une enveloppe de pneumatique Poids-lourd à armature de carcasse radiale (figure 3).


## I. MESURES ET TESTS

I-1. Mesures dynamométriques

En ce qui concerne les fils ou câbles métalliques, les mesures de force à la rupture notée Fm (charge maximale en N), de résistance à la rupture notée Rm (en MPa) et d'allongement à la rupture noté At (allongement total en %) sont effectuées en traction selon la norme ISO 6892 de 1984. En ce qui concerne les compositions de caoutchouc, les mesures de module sont effectuées en traction selon la norme AFNOR-NFT-46002 de septembre 1988 : on mesure en seconde élongation (i.e., après un cycle d'accommodation) le module sécant nominal (ou contrainte apparente, en MPa) à 10% d'allongement, noté M 10 (conditions normales de température et d'hygrométrie selon la norme AFNOR-NFT-40101 de décembre 1979).

I-2. Test de perméabilité à l'air

Le test de perméabilité à l'air permet de mesurer un indice relatif de perméabilité à l'air noté "*Pa*". Il constitue un moyen simple de mesure indirecte du taux de pénétration du câble par une composition de caoutchouc. Il est réalisé sur des câbles extraits directement, par décorticage, des nappes de caoutchouc vulcanisées qu'ils renforcent, donc pénétrés par le caoutchouc cuit.

Le test est réalisé sur une longueur de câble déterminée (par exemple 2 cm) de la manière suivante: on envoie de l'air à l'entrée du câble, sous une pression donnée (par exemple 1 bar), et on mesure la quantité d'air à la sortie, à l'aide d'un débitmètre ; pendant la mesure l'échantillon de câble est bloqué dans un joint étanche de telle manière que seule la quantité d'air traversant le câble d'une extrémité à l'autre, selon son axe longitudinal, est prise en compte par la mesure. Le débit mesuré est d'autant plus faible que le taux de pénétration du câble par le caoutchouc est élevé.

I-3. Test d'endurance en pneumatique

L'endurance des câbles en fatigue-fretting-corrosion est évaluée dans des nappes carcasse de pneumatiques poids-lourd par un test de roulage de très longue durée.

On fabrique pour cela des pneumatiques Poids-lourd dont l'armature de carcasse est constituée d'une seule nappe caoutchoutée renforcée par les câbles à tester. On monte ces pneumatiques sur des jantes connues adaptées et on les gonfle à la même pression (avec une surpression par rapport à la pression nominale) avec de l'air saturé en humidité. On fait ensuite rouler ces pneumatiques sur une machine de roulage automatique, sous une charge très élevée (surcharge par rapport à la charge nominale) et à la même vitesse, pendant un nombre déterminé de kilomètres. A la fin du roulage, on extrait les câbles de la carcasse du pneumatique, par décorticage, et on mesure la force rupture résiduelle à la fois sur les fils et sur les câbles ainsi fatigués.

On réalise d'autre part des pneumatiques identiques aux précédents et on les décortique de la même façon que précédemment, mais cette fois sans les soumettre au roulage. On mesure ainsi, après décorticage, la force rupture initiale des fils et des câbles non fatigués.

On calcule finalement la déchéance de force-rupture après fatigue (notée ΔFm et exprimée en %), en comparant la force-rupture résiduelle à la force-rupture initiale. Cette déchéance ΔFm est due à la fatigue et à l'usure (diminution de section) des fils causées par l'action conjointe des diverses sollicitations mécaniques, en particulier de l'intense travail des forces de contact entre les fils, et de l'eau provenant de l'air ambiant, en d'autres termes à la fatigue-fretting-corrosion subie par le câble à l'intérieur du pneumatique, lors du roulage.

On peut aussi choisir de conduire le test de roulage jusqu'à la destruction forcée du pneumatique, en raison d'une rupture de la nappe de carcasse ou d'un autre type d'avarie survenant plus tôt (par exemple un déchapage).

I-4. Test courroie

Lé test "courroie" est un test de fatigue connu qui a été décrit par exemple dans les demandes EP-A-0 648 891 ou WO98/41682 précitées, les câbles d'acier à tester étant incorporés dans un article en caoutchouc que l'on vulcanise.

Son principe est le suivant: l'article en caoutchouc est une courroie sans fin réalisée avec un mélange connu à base de caoutchouc, semblable à ceux qui sont couramment utilisés pour les carcasses des pneumatiques radiaux. L'axe de chaque câble est orienté selon la direction longitudinale de la courroie et les câbles sont séparés des faces de cette dernière par une épaisseur de gomme d'environ 1 mm. Lorsque la courroie est disposée de façon à former un cylindre de révolution, le câble forme un enroulement en hélice de même axe que ce cylindre (par exemple, pas de l'hélice égal à environ 2,5 mm).

On fait ensuite subir à cette courroie les sollicitations suivantes : on fait tourner la courroie autour de deux galets, de telle sorte que chaque portion élémentaire de chaque câble soit soumise à une tension de 12% de la force-rupture initiale et subisse des cycles de variation de courbure qui la font passer d'un rayon de courbure infini à un rayon de courbure de 40 mm et ceci pendant 50 millions de cycles. Le test est réalisé sous une atmosphère contrôlée, la température et l'humidité de l'air au contact de la courroie étant maintenues à environ 20°C et 60% d'humidité relative. La durée des sollicitations pour chaque courroie est de l'ordre de 3 semaines. A la fin de ces sollicitations, on extrait les câbles des courroies, par décorticage, et on mesure la force rupture résiduelle des fils des câbles fatigués.

On réalise d'autre part une courroie identique à la précédente et on la décortique de la même façon que précédemment mais cette fois sans soumettre les câbles au test de fatigue. On mesure ainsi la force rupture initiale des fils des câbles non fatigués.

On calcule finalement la déchéance de force-rupture après fatigue (notée $\Delta Fm$ et exprimée en %), en comparant la force-rupture résiduelle à la force-rupture initiale.

Cette déchéance $\Delta Fm$ est de manière connue due à la fatigue et à l'usure des fils causées par l'action conjointe des sollicitations et de l'eau provenant de l'air ambiant, ces conditions étant comparables à celles auxquelles sont soumis les câbles de renforcement dans des carcasses de pneumatiques.

1-5. Test de traction ondulée

Le test de "traction ondulée" est un test de fatigue bien connu de l'homme du métier, dans lequel le matériau testé est fatigué en extension uni-axiale pure (extension-extension), c'est-à-dire sans contrainte de compression.

Le principe est le suivant : un échantillon du câble à tester, maintenu à chacune de ses deux extrémités par les deux mors d'une machine de traction est soumis à une contrainte de traction ou extension dont l'intensité $\sigma$ varie de manière cyclique et symétrique ($\sigma_{moy} \pm \sigma_a$) autour d'une valeur moyenne ($\sigma_{moy}$), entre deux valeurs extrêmes $\sigma_{min}$ ($\sigma_{moy} - \sigma_a$) et $\sigma_{max}$ ($\sigma_{moy} + \sigma_a$) encadrant cette valeur moyenne, sous un rapport de charge "R" = ($\sigma_{min}/\sigma_{max}$) déterminé. La contrainte moyenne $\sigma_{moy}$ est donc liée au rapport de charge R et à l'amplitude $\sigma_a$ par la relation $\sigma_{moy} = \sigma_a(1+R)/(1-R)$. En pratique, le test est conduit de la manière suivante: on choisit une première amplitude de contrainte $\sigma_a$ (généralement dans un domaine de l'ordre de 1/4 à 1/3 de la résistance Rm du câble) et on lance le test de fatigue pour un nombre maximal de $10^5$ cycles (fréquence 30 Hz), le rapport de charge R étant choisi égal à 0,1. Selon le résultat obtenu -- i.e. rupture ou non-rupture du câble au bout de ces $10^5$ cycles maximum -- on applique une nouvelle amplitude $\sigma_a$ (inférieure ou supérieure à la précédente, respectivement) sur une nouvelle éprouvette, en faisant varier cette valeur $\sigma_a$ selon la méthode dite de l'escalier (Dixon & Mood ; Journal of the American statistical association, 43, 1948, 109-126). On effectue ainsi 17 itérations au total, le traitement statistique des essais défini par cette méthode de l'escalier conduit à la détermination d'une limite d'endurance - notée $\sigma_d$ - qui correspond à une probabilité de rupture du câble de 50% au bout des $10^5$ cycles de fatigue.

On utilise pour ce test une machine de fatigue en traction de la société Schenk (modèle PSA) ; la longueur utile entre les deux mors est de 10 cm ; la mesure est réalisée sous une atmosphère sèche contrôlée (taux d'humidité relative inférieur ou égal à 5% ; température de 20°C).

**II. DESCRIPTION DETAILLEE DE L'INVENTION**

II-1. Câble de l'invention

Les termes "formule" ou "structure", lorsqu'ils sont utilisés dans la présente description pour décrire les câbles, se réfèrent simplement à la construction de ces câbles.

Le câble de l'invention est un câble multicouches comportant une âme (C0) de diamètre $d_0$, une couche intermédiaire (C1) de 6 ou 7 fils (M = 6 ou 7) de diamètre $d_1$ et une couche externe insaturée (C2) de N fils de diamètre $d_2$, N étant inférieur de 1 à 3 au nombre maximal $N_{max}$ de fils enroulables en une couche unique autour de la couche C1.

Dans ce câble à couches de l'invention, le diamètre de l'âme et celui des fils des couches C1 et C2 , les pas d'hélice (donc les angles) et les sens d'enroulement des différentes couches sont définies par l'ensemble des caractéristiques ci-après (do, $d_1$, $d_2$, $p_1$ et $p_2$ exprimés en mm):

- (i) $0,14 < d_0 < 0,28$ ;
- (ii) $0,12 < d_1 < 0,25$ ;
- (iii) $0,12 < d_2 < 0,25$ ;
- (iv) pour M = 6 : $1,10 < (d_0 / d_1) < 1,40$ ;
  pour M = 7 : $1,40 < (d_0 / d_1) < 1,70$ ;
- (v) $5 \pi(d_0 + d_1) < p_1 < p_2 < 5 \pi(d_0 + 2d_1 + d_2)$ ;
- (vi) les fils des couches C1 et C2 sont enroulés dans le même sens de torsion.

Les caractéristiques (i) à (vi) ci-dessus, en combinaison, permettent d'obtenir à la fois:

- des forces de contact suffisantes mais limitées entre C0 et C1, favorables à une usure réduite et une fatigue moindre des fils de la couche C1;
- grâce notamment à une optimisation du rapport des diamètres ($d_0 / d_1$) et des angles d'hélice que forment les fils des couches C1 et C2, une pénétration optimale du caoutchouc à travers les couches C1 et C2 et jusqu'au coeur C0 de ce dernier, assurant d'une part une très haute protection contre la corrosion ou son éventuelle propagation, d'autre part une désorganisation minimale du câble sous sollicitation en forte flexion, ne nécessitant notamment pas la présence d'un fil de frette autour de la dernière couche;
- une usure par fretting réduite entre les fils des couches C1 et C2, ceci malgré la présence de pas différents ($p_1 \neq p_2$) entre les deux couches C1 et C2.

Les caractéristiques (v) et (vi) - pas $p_1$ et $p_2$ différents et couches C1 et C2 enroulés dans le même sens de torsion - font que, de manière connue, les fils des couches C1 et C2 sont essentiellement disposés selon deux couches cylindriques (i.e. tubulaires), adjacentes et concentriques. Par câbles à couches dites "tubulaires" ou "cylindriques", on entend ainsi des câbles constitués d'une âme (i.e., noyau ou partie centrale) et d'une ou plusieurs couches concentriques, chacune de forme tubulaire, disposée(s) autour de cette âme, de telle manière que, au moins dans le câble au repos, l'épaisseur de chaque couche est sensiblement égale au diamètre des fils qui la constituent ; il en résulte que la section transversale du câble a un contour ou enveloppe (notée *E*) qui est sensiblement circulaire, comme illustré par exemple sur la figure 1.

Les câbles à couches cylindriques ou tubulaires de l'invention ne doivent en particulier pas être confondus avec des câbles à couches dits "compacts", assemblages de fils enroulés au même pas et dans la même direction de torsion ; dans de tels câbles, la compacité est telle que pratiquement aucune couche distincte de fils n'est visible ; il en résulte que la section transversale de tels câbles a un contour qui n'est plus circulaire, mais polygonal, comme illustré par exemple sur la figure 2.

La couche externe C2 est une couche tubulaire de N fils dite "insaturée" ou "incomplète", c'est-à-dire que, par définition, il existe suffisamment de place dans cette couche tubulaire C2 pour y ajouter au moins un (N+1)ème fil de diamètre $d_2$, plusieurs des N fils se trouvant éventuellement au contact les uns des autres. Réciproquement, cette couche tubulaire C2 serait qualifiée de "saturée" ou "complète" s'il n'existait pas suffisamment de place dans cette couche pour y ajouter au moins un (N+l)ème fil de diamètre $d_2$.

De préférence, le câble de l'invention est un câble à couches de construction notée [1+M+N], c'est-à-dire que son âme est constituée d'un seul fil, tel que représenté par exemple à la figure 1 (câble noté C-l).

Cette figure 1 schématise une coupe perpendiculaire à l'axe (noté O) de l'âme et du câble, le câble étant supposé rectiligne et au repos. On voit que l'âme C0 (diamètre $d_0$) est formée d'un fil unique ; elle est entourée et au contact d'une couche intermédiaire C1 de 6 fils de diamètre $d_1$ enroulés ensemble en hélice selon un pas $p_1$ ; cette couche C1, d'épaisseur sensiblement égale à $d_1$, est elle-même entourée et au contact d'une couche externe C2 de 11 fils de diamètre $d_2$ enroulés ensemble en hélice selon un pas $p_2$, et donc d'épaisseur sensiblement égale à $d_2$. Les

fils enroulés autour de l'âme C0 sont ainsi disposés selon deux couches adjacentes et concentriques, tubulaires (couche C1 d'épaisseur sensiblement égale à $d_1$, puis couche C2 d'épaisseur sensiblement égale à $d_2$). On voit que les fils de la couche C1 ont leurs axes (notés $O_1$) disposés pratiquement sur un premier cercle $C_1$ représenté en pointillés, tandis que les fils de la couche C2 ont leurs axes (notés $O_2$) disposés pratiquement sur un second cercle $C_2$, représenté également en pointillés.

Le meilleur compromis de résultats, vis-à-vis en particulier de la pénétrabilité du câble par le caoutchouc et des forces de contact entre les différentes couches, est obtenu lorsque la relation suivante est vérifiée:

$$(vii) \qquad 5{,}3\ \pi\ (d_0 + d_1) < p_1 < p_2 < 4{,}7\ \pi\ (d_0 + 2d_1 + d_2).$$

En décalant ainsi les pas et donc les angles de contact entre les fils de la couche C1 d'une part, et ceux de la couche C2 d'autre part, on augmente la surface des canaux de pénétration entre ces deux couches et on améliore encore la pénétrabilité du câble, tout en optimisant ses performances en fatigue-fretting.

On rappelle ici que; selon une définition connue, le pas représente la longueur, mesurée parallèlement à l'axe O du câble, au bout de laquelle un fil ayant ce pas effectue un tour complet autour de l'axe O du câble ; ainsi, si l'on sectionne l'axe O par deux plans perpendiculaires à l'axe O et séparés par une longueur égale au pas d'un fil d'une des deux couches C1 ou C2, l'axe de ce fil ($O$, ou $O_2$) a dans ces deux plans la même position sur les deux cercles correspondant à la couche C1 ou C2 du fil considéré.

Dans le câble conforme à l'invention, tous les fils des couches C1 et C2 sont enroulés dans le même sens de torsion, c'est-à-dire soit dans la direction S (disposition "S/S"), soit dans la direction Z (disposition "Z/Z"). Une telle disposition des couches C1 et C2 est plutôt contraire aux constructions les plus classiques des câbles à couches [L+M+N], notamment ceux de construction [3+9+15], qui nécessitent le plus souvent un croisement des deux couches C1 et C2 (soit une disposition "S/Z" ou "Z/S") afin que les fils de la couche C2 viennent eux-mêmes fretter les fils de la couche C1. L'enroulement dans le même sens des couches C1 et C2 permet avantageusement, dans le câble conforme à l'invention, de minimiser les frottements entre ces deux couches C1 et C2 et donc l'usure des fils qui les constituent.

Dans le câble de l'invention, les rapports ($d_0/d_1$) doivent être fixés dans des limites déterminées, selon le nombre M (6 ou 7) de fils de la couche C1. Une valeur trop faible de ce rapport est préjudiciable à l'usure entre l'âme et les fils de la couche C1. Une valeur trop élevée nuit à la compacité du câble, pour un niveau de résistance en définitive peu modifié, ainsi qu'à sa flexibilité ; la rigidité accrue de l'âme due à un diamètre $d_0$ trop élevé serait par ailleurs préjudiciable à la faisabilité elle-même du câble, lors des opérations de câblage.

Les fils des couches C1 et C2 peuvent avoir un diamètre identique ou différent d'une couche à l'autre. On utilise de préférence des fils de même diamètre ($d_1=d_2$), notamment pour simplifier le procédé de câblage et abaisser les coûts, comme représenté par exemple sur la figure 1.

Le nombre maximal $N_{max}$ de fils enroulables en une couche unique saturée autour de la couche C1 est bien entendu fonction de nombreux paramètres (diamètre $d_0$ de l'âme, nombre M et diamètre $d_1$ des fils de la couche C1, diamètre $d_2$ des fils de la couche C2). A titre d'exemple, si $N_{max}$ est égal à 12, N peut alors varier de 9 à 11 (par exemple constructions [1+M+9], [1+M+10] ou [1+M+11]) ; si $N_{max}$ est par exemple égal à 14, N peut alors varier de 11 à 13 (par exemple constructions [1+M+11], [1+M+12] ou [1+M+13]).

De préférence, le nombre N de fils dans la couche C2 est inférieur de 1 à 2 au nombre maximal $N_{max}$. Ceci permet dans la plupart des cas d'aménager un espace suffisant entre les fils pour que les compositions de caoutchouc puissent s'infiltrer entre les fils de la couche C2 et atteindre la couche C1. L'invention est ainsi de préférence mise en oeuvre avec un câble choisi parmi les câbles de structure [1+6+10], [1+6+11], [1+6+12], [1+7+11], [1+7+12] ou [1+7+13].

A titre d'exemples de câbles préférentiels conformes à l'invention pour lesquels $d_1=d_2$, on citera notamment les câbles vérifiant la relation (vii) précitée et ayant les constructions suivantes :

- [1+6+10] avec $d_0$ = 0,15 mm et $d_1 = d_2$ = 0,13 mm ; 4,7 mm < $p_1$ < $p_2$ < 8 mm ;
- [1+6+10] avec $d_0$ = 0,23 mm et $d_1 = d_2$ = 0,20 mm ; 7,2 mm < $p_1$ < $p_2$ < 12,3 mm ;
- [1+6+11] avec $d_0$ = 0,20 mm et $d_1 = d_2$ = 0,175 mm ; 6,2 mm < $p_1$ < $p_2$ < 10,7 mm ;
- [1+6+11] avec $d_0$ = 0,26 mm et $d_1 = d_2$ = 0,225 mm ; 8,1 mm < $p_1$ < $p_2$ < 13,8 mm ;
- [1+6+12] avec $d_0$ = 0,26 mm et $d_1 = d_2$ = 0,20 mm ; 7,7 mm < $p_1$ < $p_2$ < 12,7 mm ;
- [1+6+12] avec $d_0$ = 0,225 mm et $d_1 = d_2$ = 0,175 mm ; 6,7 mm < $p_1$ < $p_2$ < 11,1 mm ;
- [1+7+11] avec $d_0$ = 0,25 mm et $d_1 = d_2$ = 0,175 mm; 7,1 mm < $p_1$ < $p_2$ < 11,4 mm ;
- [1+7+11] avec $d_0$ =0,215 mm et $d_1 = d_2$ = 0,15 mm ; 6,1 mm < $p_1$ < $p_2$ < 9,8 mm ;
- [1+7+12] avec $d_0$ = 0,23 mm et $d_1 = d_2$ = 0,155 mm ; 6,4 mm < $p_1$ < $p_2$ < 10,3 mm ;
- [1+7+12] avec $d_0$ = 0,26 mm et $d_1 = d_2$ = 0,175 mm ; 7,2 mm < $p_1$ < $p_2$ < 11,6 mm ;

- [1+7+13] avec $d_0$ = 0,24 mm et $d_1$ = $d_2$ = 0,15 mm ; 6,5 mm < $p_1$ < $p_2$ < 10,2 mm ;
- [1+7+13] avec $d_0$ = 0,275 mm et $d_1$ = $d_2$ = 0,185 mm ; 7,7 mm < $p_1$ < $p_2$ < 12,3 mm.

L'invention est préférentiellement mise en oeuvre, dans les carcasses des pneumatiques Poids-lourd, avec des câbles de structure [1+6+N], plus préférentiellement de structure [1+6+10], [1+6+11] ou [1+6+12]. Plus préférentiellement encore, on utilise des câbles de structure [1+6+11]. Pour un meilleur compromis entre résistance, faisabilité et tenue en flexion du câble, d'une part, pénétrabilité par les compositions de caoutchouc d'autre part, on préfère que les diamètres des fils des couches C1 et C2, que ces fils aient un diamètre identique ou non, soient compris entre 0,14 et 0,22 mm.

Dans un tel cas, si $d_1$ =$d_2$, on a plus préférentiellement la relation suivante qui est vérifiée:

$$5 < p_1 < p_2 < 15.$$

Pour les armatures de carcasse de pneumatiques Poids-lourd, les diamètres $d_1$ et $d_2$ sont encore plus préférentiellement choisis entre 0,16 et 0,19 mm : un diamètre inférieur à 0,19mm permet de réduire le niveau des contraintes subies par les fils lors des variations importantes de courbure des câbles, alors qu'on choisit de préférence des diamètres supérieurs à 0,16 mm pour des raisons notamment de résistance des fils et de coût industriel.

Lorsque $d_1$ et $d_2$ sont ainsi choisis compris entre 0,16 et 0,19 mm, les relations suivantes sont plus préférentiellement vérifiées:

- 0,18 < $d_0$ < 0,24 ;
- 5 < $p_1$ < $p_2$ < 12 .

Un mode de réalisation avantageux consiste par exemple à choisir $p_1$ compris entre 5 et 8 mm et $p_2$ compris entre 8 et 12 mm.

L'invention peut être mise en oeuvre avec tout type de fils en acier, par exemple des fils en acier au carbone et/ou des fils en acier inoxydable tels que décrits par exemple dans les demandes EP-A-0 648 891 ou WO98/41682 précitées. On utilise de préférence un acier au carbone, mais il est bien entendu possible d'utiliser d'autres aciers ou d'autres alliages.

Lorsqu'un acier au carbone est utilisé, sa teneur en carbone (% en poids d'acier) est de préférence comprise entre 0,50% et 1,0%, plus préférentiellement entre 0,68% et 0,95% ; ces teneurs représentent un bon compromis entre les propriétés mécaniques requises pour le pneumatique et la faisabilité du fil. Il est à noter que dans les applications où les plus hautes résistances mécaniques ne sont pas nécessaires, on pourra utiliser avantageusement des aciers au carbone dont la teneur en carbone est comprise entre 0,50% et 0,68%, notamment varie de 0,55% à 0,60%, de tels aciers étant finalement moins coûteux car plus faciles à tréfiler. Un autre mode avantageux de réalisation de l'invention peut consister aussi, selon les applications visées, à utiliser des aciers à faible teneur en carbone, comprise par exemple entre 0,2% et 0,5%, en raison notamment d'un coût plus bas et d'une plus grande facilité de tréfilage.

Lorsque les câbles de l'invention sont utilisés pour renforcer les carcasses de pneumatiques pour véhicules industriels, leurs fils ont de préférence une résistance en traction supérieure à 2000 MPa, plus préférentiellement supérieure à 3000 MPa. Dans le cas de pneumatiques de très grosses dimensions, on choisira notamment des fils dont la résistance en traction est comprise entre 3000 MPa et 4000 MPa. L'homme du métier sait comment fabriquer des fils d'acier au carbone présentant une telle résistance, en ajustant notamment la teneur en carbone de l'acier et les taux d'écrouissage final ($\varepsilon$) de ces fils.

Le câble de l'invention pourrait comporter une frette externe, constituée par exemple d'un fil unique, métallique ou non, enroulé en hélice autour du câble selon un pas plus court que celui de la couche externe, et un sens d'enroulement opposé ou identique à celui de cette couche externe.

Cependant, grâce à sa structure spécifique, le câble de l'invention, déjà auto-fretté, ne nécessite généralement pas l'emploi d'un fil de frette externe, ce qui résout avantageusement les problèmes d'usure entre la frette et les fils de la couche la plus externe du câble.

Toutefois, si un fil de frette est utilisé, dans le cas général où les fils de la couche C2 sont en acier au carbone, on pourra alors avantageusement choisir un fil de frette en acier inoxydable afin de réduire l'usure par fretting de ces fils en acier au carbone au contact de la frette en acier inoxydable, comme enseigné par la demande WO98/41682 précitée, le fil en acier inoxydable pouvant être éventuellement remplacé, de manière équivalente, par un fil composite dont seule la peau est en acier inoxydable et le coeur en acier au carbone, tel que décrit par exemple dans la demande de brevet EP-A-0 976 541.

II-2. Pneumatique de l'invention

L'invention concerne également les pneumatiques destinés à des véhicules industriels, plus particulièrement les pneumatiques Poids-lourds ainsi que les nappes d'armature de carcasse de ces pneumatiques Poids-lourd.

A titre d'exemple, la figure 3 représente de manière schématique une coupe radiale d'un pneumatique Poids-lourd 1 à armature de carcasse radiale pouvant être conforme ou non à l'invention, dans cette représentation générale. Ce pneumatique 1 comporte un sommet 2, deux flancs 3 et deux bourrelets 4, chacun de ces bourrelets 4 étant renforcé avec une tringle 5. Le sommet 2 est de manière connue en soi renforcé par une armature de sommet 6 constituée par exemple d'au moins deux nappes croisées superposées, renforcées par des câbles métalliques connus. Une armature de carcasse 7 est enroulée autour des deux tringles 5 dans chaque bourrelet 4, le retournement 8 de cette armature 7 étant par exemple disposé vers l'extérieur du pneumatique 1 qui est ici représenté monté sur sa jante 9. L'armature de carcasse 7 est constituée d'au moins une nappe renforcée par des câbles dits "radiaux", c'est-à-dire que ces câbles sont disposés pratiquement parallèles les uns aux autres et s'étendent d'un bourrelet à l'autre de manière à former un angle compris entre 80° et 90° avec le plan circonférentiel médian (plan perpendiculaire à l'axe de rotation du pneumatique qui est situé à mi-distance des deux bourrelets 4 et passe par le milieu de l'armature de sommet 6).

Le pneumatique conforme à l'invention est caractérisé en ce que son armature de carcasse 7 comporte au moins une nappe de carcasse dont les câbles radiaux sont des câbles d'acier multicouches conformes à l'invention.

Dans cette nappe de carcasse, la densité des câbles conformes à l'invention est de préférence comprise entre 40 et 100 câbles par dm (décimètre) de nappe radiale, plus préférentiellement entre 50 et 80 câbles par dm, la distance entre deux câbles radiaux adjacents, d'axe en axe, étant ainsi de préférence comprise entre 1,0 et 2,5 mm, plus préférentiellement entre 1,25 et 2,0 mm. Les câbles conformes à l'invention sont de préférence disposés de telle manière que la largeur (notée "$\ell$") du pont de caoutchouc, entre deux câbles adjacents, est comprise entre 0,35 et 1 mm. Cette largeur $\ell$ représente de manière connue la différence entre le pas de calandrage (pas de pose du câble dans le tissu de caoutchouc) et le diamètre du câble. En dessous de la valeur minimale indiquée, le pont de caoutchouc, trop étroit, risque de se dégrader mécaniquement lors du travail de la nappe, notamment au cours des déformations subies dans son propre plan par extension ou cisaillement. Au-delà du maximum indiqué, on s'expose à des risques d'apparition de défauts d'aspect sur les flancs des pneumatiques ou de pénétration d'objets, par perforation, entre les câbles. Plus préférentiellement, pour ces mêmes raisons, la largeur "$\ell$" est choisie comprise entre 0,5 et 0,8 mm.

De préférence, la composition de caoutchouc utilisée pour le tissu de la nappe de carcasse présente, à l'état vulcanisé (i.e., après cuisson), un module sécant en extension M10 qui est inférieur à 8 MPa, plus préférentiellement compris entre 4 et 8 MPa. C'est dans un tel domaine de modules que l'on a enregistré le meilleur compromis d'endurance entre les câbles de l'invention d'une part, les tissus renforcés de ces câbles d'autre part.

## III. EXEMPLES DE REALISATION DE L'INVENTION

III-1. Nature et propriétés des fils utilisés

Pour la réalisation des exemples de câbles conformes ou non conformes à l'invention, on utilise des fils fins en acier au carbone préparés selon des méthodes connues telles que décrites par exemple dans les demandes EP-A-0 648 891 ou WO98/41682 précitées, en partant de fils commerciaux dont le diamètre initial est d'environ 1 mm. L'acier utilisé est un acier au carbone connu (norme USA AISI 1069) dont la teneur en carbone est de 0,7% environ, comportant 0,5% de manganèse et 0,2% de silicium environ, le reste étant constitué de fer et des impuretés inévitables habituelles liées au procédé de fabrication de l'acier.

Les fils commerciaux de départ subissent d'abord un traitement connu de dégraissage et/ou décapage avant leur mise en oeuvre ultérieure. A ce stade, leur résistance à la rupture est égale à environ 1150 MPa, leur allongement à la rupture est d'environ 10%. On effectue ensuite sur chaque fil un dépôt de cuivre, puis un dépôt de zinc, par voie électrolytique à la température ambiante, et on chauffe ensuite thermiquement par effet Joule à 540°C pour obtenir du laiton par diffusion du cuivre et du zinc, le rapport pondéral (phase $\alpha$) / (phase $\alpha$ + phase $\beta$) étant égal à environ 0,85. Aucun traitement thermique n'est effectué sur le fil après l'obtention du revêtement de laiton.

On effectue alors sur chaque fil un écrouissage dit "final" (i.e. après le dernier traitement thermique), par tréfilage à froid en milieu humide avec un lubrifiant de tréfilage qui se présente sous forme d'une émulsion dans de l'eau. Ce tréfilage humide est effectué de manière connue afin d'obtenir le taux d'écrouissage final (noté $\varepsilon$) calculé à partir du diamètre initial indiqué précédemment pour les fils commerciaux de départ.

Par définition, le taux d'un écrouissage noté $\varepsilon$ est donné par la formule $\varepsilon = \text{Ln}(S_i / S_f)$, dans laquelle Ln est le logarithme népérien, $S_i$ représente la section initiale du fil avant cet écrouissage et $S_f$ la section finale du fil après cet écrouissage.

En jouant sur le taux d'écrouissage final, on prépare ainsi deux groupes de fils de diamètres différents, un premier groupe de fils de diamètre moyen $\phi$ égal à environ 0,200 mm ($\varepsilon = 3,2$) pour les fils d'indice 1 (fils notés F1) et un second groupe de fils de diamètre moyen $\phi$ égal à environ 0,175 mm ($\varepsilon$ = 3,5) pour les fils d'indice 2 (fils notés F2).

Les fils en acier ainsi tréfilés ont les propriétés mécaniques indiquées dans le tableau 1.

Le revêtement de laiton qui entoure les fils a une épaisseur très faible, nettement inférieure au micromètre, par exemple de l'ordre de 0,15 à 0,30 $\mu$m, ce qui est négligeable par rapport au diamètre des fils en acier. Bien entendu, la composition de l'acier du fil en ses différents éléments (par exemple C, Mn, Si) est la même que celle de l'acier du fil de départ.

On rappelle que lors du procédé de fabrication des fils, le revêtement de laiton facilite le tréfilage du fil, ainsi que le collage du fil avec le caoutchouc. Bien entendu, les fils pourraient être recouverts d'une fine couche métallique autre que du laiton, ayant par exemple pour fonction d'améliorer la résistance à la corrosion de ces fils et/ou leur adhésion au caoutchouc, par exemple une fine couche de Co, Ni, Zn, Al, d'un alliage de deux ou plus des composés Cu, Zn, Al, Ni, Co, Sn.

<u>III-2. Réalisation des câbles</u>

Les fils précédents sont ensuite assemblés sous forme de câbles à couches de structure [1+6+11] pour les câbles conformes à l'invention (câbles notés C-I), de structure [1+6+12] pour les câbles de l'art antérieur (câbles notés C-II) ; les fils F1 sont utilisés pour former l'âme C0, les fils $F_2$ pour former les couches C1 et C2 de ces différents câbles.

Ces câbles sont fabriqués avec des dispositifs de câblage (câbleuse Barmag) et selon des procédés bien connus de l'homme du métier qui ne sont pas décrits ici pour la simplicité de l'exposé. Le câble C-II est réalisé en une seule opération de câblage ($p_1$ = $p_2$) alors que le câble C-I nécessite, en raison de pas $p_1$ et $p_2$ différents, deux opérations successives (fabrication d'un câble [1+6] puis câblage de la dernière couche autour de ce câble [1+6]), ces deux opérations pouvant avantageusement être réalisées en ligne à l'aide de deux câbleuses disposées en série.

Le câble C-I conforme à l'invention présente les caractéristiques suivantes:

- structure [1+6+11]
- $d_0$ = 0,200 ;
- ($d_0$ / $d_1$) = 1,14 ;
- $d_1$ = $d_2$ = 0,175 ;
- $p_1$ = 7 ; $p_2$ = 10.

Le câble C-II témoin présente les caractéristiques suivantes:

- structure [1+6+12]
- $d_0$ = 0,200 ;
- ($d_0$ / $d_1$) = 1,14 ;
- $d_1$ = $d_2$ = 0,175 ;
- $p_1$ = 10 ; $p_2$ = 10.

Quels que soient les câbles, les fils F2 des couches C1 et C2 sont enroulés dans le même sens de torsion (direction Z). Les deux câbles testés sont dépourvus de frette et ont un même diamètre d'environ 0,90 mm. L'âme de ces câbles a pour diamètre $d_0$ le même diamètre que celui de son fil unique F1, pratiquement dépourvu de torsion sur lui-même. On note que ces deux câbles ont une construction très voisine, le câble de l'invention se distinguant seulement par le fait que sa couche externe C2 comporte un fil en moins et que ses pas $p_1$ et $p_2$ sont différents tout en vérifiant par ailleurs la relation (v) précitée. Dans le câble C-I, N est inférieur de 1 au nombre maximal (ici $N_{max}$ = 12) de fils enroulables en une couche unique saturée autour de la couche C1.

Le câble de l'invention est un câble à couches tubulaires tel que schématisé en coupe transversale sur la figure 1, déjà commentée précédemment. Le câble témoin est un câble à couches compact tel que schématisé sur la figure 2. On voit notamment sur cette coupe transversale de la figure 2 que le câble C-II, bien que de construction très voisine, a en raison de son mode de câblage (fils enroulés dans le même sens et pas $p_1$ et $p_2$ égaux) une structure beaucoup plus compacte que celle du câble C-I ; il en résulte qu'aucune couche tubulaire de fils n'est visible, la section transversale de ce câble C-II ayant un contours E qui n'est plus circulaire mais hexagonal.

On note que le câble C-I de l'invention (M=6) vérifie bien les caractéristiques suivantes:

- (i) 0,14 < $d_0$ < 0,28 ;
- (ii) 0,12 < $d_1$ < 0,25 ;
- (iii) 0,12 < $d_2$ < 0,25 ;
- (iv) 1,10 < ($d_0$ / $d_1$) < 1,40;
- (v) 5 $\pi$ ($d_0$ + $d_1$) < $p_1$ < $p_2$ < 5 $\pi$ ($d_0$ + 2$d_1$ + $d_2$) ;

- (vi) les fils des couches C1 et C2 sont enroulés dans le même sens de torsion.

Ce câble C-I vérifie en outre chacune des relations préférentielles suivantes:

- $5,3\ \pi(d_0 + d_1) < p_1 < p_2 < 4,7\ \pi(d_0 + 2d_1 + d_2)$ ;
- $0,18 < d_0 < 0,24$ ;
- $0,16 < d_1 = d_2 < 0,19$ ;
- $5 < p_1 < p_2 < 12$ .

Les propriétés mécaniques de ces différents câbles sont indiquées dans le tableau 2. L'allongement At indiqué pour les fils est l'allongement total enregistré à la rupture du fil, c'est-à-dire à la fois la partie élastique de l'allongement (loi de Hooke) et la partie plastique de l'allongement. Quant à l'allongement des câbles, s'ajoute de manière connue à ces deux parties la partie dite structurelle de l'allongement, inhérente à la géométrie spécifique du câble testé.

III-3. Endurance en pneumatique

A) Essai 1

Les câbles à couches précédents sont incorporés par calandrage à un tissu caoutchouté formé d'une composition connue à base de caoutchouc naturel et de noir de carbone à titre de charge renforçante, utilisée conventionnellement pour la fabrication des nappes de carcasses des pneumatiques Poids-lourd radiaux (M10 égal à 6 MPa environ, après cuisson). Cette composition comporte essentiellement, en plus de l'élastomère et de la charge renforçante, un antioxydant, de l'acide stéarique, une huile d'extension, du naphténate de cobalt en tant que promoteur d'adhésion, enfin un système de vulcanisation (soufre, accélérateur, ZnO).

Ces câbles sont disposés parallèlement de manière connue, selon une densité de 63 câbles par dm de nappe, ce qui, compte tenu du diamètre des câbles, équivaut à une largeur "$\ell$" des ponts de caoutchouc, entre deux câbles adjacents, d'environ 0,70 mm.

On réalise ensuite deux séries (notées P-1 et P-2,) de pneumatiques Poids-lourd de dimension 315/80 R 22.5 XZA, destinés à être montés sur une jante à sièges coniques (inclinaison de 15 degrés) avec deux pneumatiques dans chaque série, un destiné au roulage, l'autre au décorticage sur pneumatique neuf. L'armature de carcasse de ces pneumatiques est constituée d'une seule nappe radiale formée du tissu caoutchouté précédent, renforcée respectivement par les câbles C-I et C-II.

Les pneumatiques P-1 constituent la série conforme à l'invention, les pneumatiques P-2 la série témoin de l'art antérieur. Ces pneumatiques sont donc identiques à l'exception des câbles à couches qui renforcent leur armature de carcasse 7.

Leur armature de sommet 6, en particulier, est de manière connue en soi constituée de (i) deux demi-nappes de triangulation renforcées de câbles métalliques inclinés de 65 degrés, surmontées de (ii) deux nappes de travail superposées croisées, renforcées de câbles métalliques inextensibles inclinés de 26 degrés (nappe radialement interne) et 18 degrés (nappe radialement externe), ces deux nappes de travail étant recouvertes par (iii) une nappe sommet de protection renforcée de câbles métalliques élastiques (haute élongation) inclinés de 18 degrés. Dans chacune de ces nappes d'armature de sommet, les câbles métalliques utilisés sont des câbles conventionnels connus, disposés sensiblement parallèlement les uns par rapport aux autres, et tous les angles d'inclinaison indiqués sont mesurés par rapport au plan circonférentiel médian.

Les pneumatiques P-2 sont des pneumatiques commercialisés par la Demanderesse pour des véhicules Poids-lourd et constituent, en raison de leurs performances reconnues, un témoin de choix pour cet essai.

On fait subir à ces pneumatiques un test de roulage tel que décrit au § 1-3, avec un total de 250 000 km parcourus. La distance imposée à chaque type de pneumatique est très élevée ; elle équivaut à un roulage en continu d'une durée de cinq mois environ et à 80 millions de cycles de fatigue.

Malgré ces conditions de roulage très sévères, les deux pneumatiques testés roulent sans dommage jusqu'au bout du test, en particulier sans rupture des câbles de la nappe de carcasse; ceci illustre notamment pour l'homme du métier la performance élevée des deux types de pneumatiques, y compris des pneumatiques témoins.

Après roulage, on réalise un décorticage c'est-à-dire une extraction des câbles hors des pneumatiques. Les câbles sont alors soumis à des essais de traction, en mesurant à chaque fois la force-rupture initiale (câble extrait du pneumatique neuf) et la force-rupture résiduelle (câble extrait du pneumatique ayant roulé) de chaque type de fil, selon la position du fil dans le câble, et pour chacun des câbles testés. La déchéance moyenne ΔFm donnée en % dans le tableau 3, est calculée à la fois pour les fils d'âme (C0) et pour les fils des couches C1 et C2. Les déchéances ΔFm globales sont également mesurées sur les câbles eux-mêmes.

A la lecture du tableau 3, on constate que, quelle que soit la zone du câble analysée (âme C0, couches C1 ou C2), les meilleurs résultats sont enregistrés sur le câble C-I conforme à l'invention. Si les déchéances ΔFm restent assez voisines en ce qui concerne la couche externe C2 (bien que plus faibles dans le câble selon l'invention), on note que plus on pénètre à l'intérieur du câble (couche C1 puis âme C0), plus les écarts se creusent en faveur du câble conforme à l'invention ; la déchéance de l'âme, en particulier, est quatre fois plus faible dans le câble de l'invention (2% au lieu de 8%). La déchéance globale ΔFm du câble de l'invention est sensiblement inférieure à celle du câble témoin (2% au lieu de 5%).

Corrélativement aux résultats ci-dessus, un examen visuel des différents fils montre que les phénomènes d'usure ou fretting (érosion de matériel aux points de contact), qui résultent du frottement répété des fils entre eux, sont nettement réduits dans les câbles C-1 par rapport aux câbles C-2.

Ces résultats sont inattendus dans la mesure où l'homme du métier pouvait s'attendre au contraire à ce que le choix de pas d'hélice $p_1$ et $p_2$ différents dans le câble conforme à l'invention, et donc la présence d'angles de contact différents entre les couches C1 et C2 - qui ont pour effet de diminuer les surfaces de contact et donc d'augmenter les pressions de contact entre les fils des couches C1 et C2 - se traduisent au contraire par une augmentation du frottement et donc de l'usure entre les fils, et finalement, au bout du compte, pénalisent le câble. Il n'en est rien.

B) Essai 2

On réalise un nouvel essai de roulage avec les mêmes tissus que précédemment, renforcés des câbles C-I et C-II, en fabriquant deux autres séries de pneumatiques (deux pneus par série), de mêmes dimensions que dans l'essai précédent. Les pneumatiques conformes à l'invention sont notés P-3, les pneumatiques témoins sont notés P-4. Les conditions particulières du test de roulage sont les mêmes que précédemment, à la différence près que l'on augmente encore la distance parcourue de 50 000 km, soit un total de 300 000 km imposés aux pneumatiques.

Les résultats du tableau 3 confirment bien les résultats de l'essai 1 précédent. Les plus faibles déchéances sont une nouvelle fois enregistrées sur le câble C-I conforme à l'invention (pneumatique P-3), quelle que soit la couche considérée. Plus on pénètre à l'intérieur du câble, plus les écarts se creusent au profit du câble de l'invention, avec notamment une déchéance de l'âme quatre fois plus faible que dans le cas du câble témoin (3% au lieu de 12%). Il en résulte une déchéance globale du câble de l'invention sensiblement inférieure à celle du câble témoin (4% au lieu de 7%).

C) Essai 3

On réalise un nouvel essai de roulage avec les mêmes tissus caoutchoutés que précédemment, mais cette fois dans des pneumatiques Poids-lourd destinés à être montés sur une jante à sièges plats, de dimension 10.00 R 20 XZE.

Tous les pneus testés sont identiques, à l'exception des câbles à couches qui renforcent leur armature de carcasse 7. Cette armature de carcasse 7 est constituée d'une seule nappe radiale formée du tissu caoutchouté précédent, renforcé soit par les câbles C-I soit par des câbles notés C-III. L'armature de sommet 6 de ces pneus est de manière connue constituée de (i) deux nappes de travail superposées croisées, renforcées de câbles métalliques inclinés de 22 degrés, ces deux nappes de travail étant recouvertes par (ii) une nappe sommet de protection renforcée de câbles métalliques élastiques inclinés de 22 degrés. Dans chacune de ces nappes d'armature sommet, les câbles métalliques utilisés sont des câbles conventionnels connus, disposés sensiblement parallèlement les uns par rapport aux autres, et tous les angles d'inclinaison indiqués sont mesurés par rapport au plan circonférentiel médian.

Une série de deux pneumatiques (notés P-5) est renforcée par les câbles C-I, une autre série de deux pneumatiques (notés P-6) est renforcée par des câbles connus (notés C-III) décrits ci-après. Dans chaque série, un pneumatique est destiné au roulage, l'autre au décorticage sur pneumatique neuf. Les pneumatiques P-5 constituent donc la série conforme à l'invention, les pneumatiques P-6 la série témoin.

Les câbles C-III sont des câbles connus de structure [3+9] (0,23) frettée, couramment utilisés pour le renforcement des pneumatiques poids-lourd de telles dimensions. Ils sont constitués de 12 fils (notés $F_3$ dans le tableau 4) de même diamètre 0,23 mm, avec une âme de 3 fils enroulés ensemble en hélice (direction S) selon un pas de 6,5 mm, cette âme étant entourée d'une couche unique de 9 fils eux-mêmes enroulés ensemble en hélice (direction S) selon un pas de 12,5 mm ; l'ensemble est fretté par un fil unique de diamètre 0,15 mm enroulé en hélice (direction Z) selon un pas de 3,5 mm. Les 12 fils (notés $F_3$) et le câble (noté C-III) ont les propriétés indiquées dans le tableau 4.

On fait subir à ces pneumatiques un test de roulage sévère tel que décrit au paragraphe 1-3, mais cette fois en conduisant le test jusqu'à la destruction d'un des pneumatiques testés.

On constate que le pneumatique témoin P-6, dans les conditions forcées de roulage qui lui sont imposées, est détruit au bout de 100 000 km, suite à une rupture de la nappe de carcasse (nombreux câbles C-III rompus). Le roulage est alors stoppé sur le pneumatique P-5 conforme à l'invention, puis l'on extrait des câbles de l'invention pour mesurer la déchéance ΔFm de leur force-rupture. On constate alors que les câbles C-I conformes à l'invention ont tous résisté au test de roulage (aucune rupture) et qu'ils ont subi une perte moyenne de force-rupture ΔFm qui reste relativement faible puisque inférieure à 10% (8% sur le câble, 7 à 9% sur les fils pris individuellement, selon la couche analysée). L'utilisation du câble conforme à l'invention permet donc d'augmenter de manière tout à fait sensible la longévité de la carcasse, déjà excellente par ailleurs sur le pneumatique témoin.

D) Test de perméabilité à l'air

Les résultats d'endurance décrits précédemment apparaissent bien corrélés au taux de pénétrabilité des câbles par le caoutchouc, comme expliqué ci-après.

Les câbles C-I à C-III non fatigués (après extraction hors des pneumatiques neufs) ont été soumis au test de perméabilité à l'air décrit au paragraphe 1-2, en mesurant la quantité d'air traversant les câbles en 1 minute (moyenne. de 10 mesures). Les indices de perméabilité $Pa$ obtenus sont reportés dans le tableau 5 (en unités relatives). Les trois valeurs indiquées correspondent à des prélèvements réalisés en trois points différents de l'armature de carcasse des pneumatiques (épaule, mi-flanc et zone basse du pneumatique), la base 100 étant retenue pour les câbles témoins C-II de structure [1+6+12] utilisés dans les pneumatiques P-2 et P-4.

On note que le câblé conforme à l'invention est celui qui, de très loin, présente l'indice de perméabilité à l'air $Pa$ le plus bas (10 fois plus bas que celui du témoin C-II, pratiquement 30 fois plus bas que celui du câble témoin C-III), et donc le taux de pénétration par le caoutchouc le plus élevé. Sa construction spécifique rend possible, lors du moulage et/ou de la cuisson des pneumatiques, une migration quasiment complète du caoutchouc à l'intérieur de câble, jusqu'au coeur de ce dernier, sans formation de canaux vides. Le câble, ainsi rendu imperméable par le caoutchouc, se trouve protégé des flux d'oxygène et d'humidité qui transitent par exemple depuis les flancs ou la bande de roulement des pneumatiques vers les zones de l'armature de carcasse, où le câble de manière connue est soumis au travail mécanique le plus intense.

III-4. Autres tests comparatifs

Dans cette nouvelle série d'essais, on prépare 5 câbles à couches notés C-IV à C-VIII, de construction (1+6+11) ou (1+7+11), ces câbles étant conformes on non conformes à l'invention, pour les soumettre ensuite au test de fatigue en traction ondulée décrit au paragraphe 1-5 précédent.

A) Essai 4 (câbles C-IV à C-VI)

Les câbles C-IV à C-VI, préparés à partir des fils F1 et F2 précédemment décrits, ont les propriétés indiquées dans le tableau 6 et les caractéristiques qui suivent.

- Câble C-IV (conforme à l'invention):

  - structure [1+6+11]
  - $d_0$ = 0,200 ;
  - ($d_0$ / $d_1$) = 1,14 ;
  - $d_1 = d_2$ = 0,175 ;
  - $p_1$ = 7 ; $p_2$ = 10.

- Câble C-V (témoin):

  - structure [1+6+11]
  - $d_0$ = 0,200 ;
  - ($d_0$ / $d_1$) = 1,14 ;
  - $d_1 = d_2$ = 0,175 ;
  - $p_1$ = 5 ; $p_2$ = 10.

- Câble C-VI (témoin):

  - structure [1+6+11]
  - $d_0$ = 0,200 ;
  - ($d_0$ / $d_1$) = 1,14 ;
  - $d_1 = d_2$ = 0,175 ;
  - $p_1$ = 7,5 ; $p_2$ = 15.

Ces câbles ont donc une construction très voisine : dans les trois cas, N est inférieur de l'au nombre maximal (ici $N_{max}$ = 12) de fils enroulables en une couche unique saturée autour de la couche C1 ; ils ont tous une construction à couches tubulaires comme illustré à la figure 1 ; les pas $p_1$ et $p_2$ sont différents pour chaque câble ; les pas $p_2$ sont par ailleurs identiques pour les câbles C-IV et C-V. Cependant, seul le câble C-IV vérifie la relation (v) précitée et est donc conforme à l'invention.

Au test de fatigue en traction ondulée, ces trois câbles ont donné les résultats apparaissant dans le tableau 7 ; $\sigma_d$ y est exprimée en MPa ainsi qu'en unités relatives (u.r.), la base 100 étant retenue pour le câble de l'invention.

On note que, de manière inattendue, malgré des constructions des câble très voisines, le câble de l'invention C-IV se distingue par une endurance en fatigue nettement supérieure à celle des deux câbles témoins, en particulier supérieure de 23% à celle du câble témoin C-V dont seul le pas $p_1$ diffère (relation (v) non vérifiée) en comparaison avec le câble de l'invention.

<u>B) Essai 5 (câbles C-VII et C-VIII)</u>

Les câbles C-VII et C-VIII ont été préparés à partir d'une part des fils F2 précédemment décrits (diamètre moyen $\phi$ égal à 0,175 mm) pour leurs couches C 1 et C2, d'autre part à partir des fils notés ci-après $F_4$ (diamètre moyen $\phi$ égal à environ 0,250 mm) pour leur âme C0. Ces fils $F_4$ ont été fabriqués comme indiqué au paragraphe III-1 précédent, en ajustant le taux d'écrouissage final pour l'obtention du diamètre final visé ; ils ont les propriétés mécaniques indiquées dans le tableau 8.

Ces câbles C-VII et C-VIII ont les caractéristiques qui suivent (voir propriétés mécaniques dans le tableau 8) :

- Câble C-VII (conforme à l'invention):

    - structure [1+7+11]
    - $d_0$ = 0,250 ;
    - ($d_0$ / $d_1$) = 1,43 ;
    - $d_1$ = $d_2$ = 0,175 ;
    - $p_1$ = 7 ; $p_2$ = 11 .

- Câble C-VIII (témoin):

    - structure [1+7+11] .
    - $d_0$ = 0,250 ;
    - ($d_0$ / $d_1$) = 1,43 ;
    - $d_1$ = $d_2$ = 0,175 ;
    - $p_1$ = 5 ; $p_2$ = 10 .

Ces deux câbles ont donc une construction très voisine : dans les deux cas, N est inférieur de 2 au nombre maximal (ici $N_{max}$ = 13) de fils enroulables en une couche unique saturée autour de la couche C1, tous ces câbles ayant une structure du type à couches tubulaires telle qu'illustrée à la figure 1. Les pas $p_1$ et $p_2$ sont proches d'un câble à l'autre, mais seul le câble C-VII vérifie la relation (v) précitée et est donc conforme à l'invention.

Au test de fatigue en traction ondulée (tableau 9 - base 100 retenue pour le câble témoin en ce qui concerne les valeurs en unités relatives), le câble de l'invention C-VII se distingue par une endurance $\sigma_d$ nettement supérieure (plus 26% environ par rapport au témoin), ce qui confirme bien les résultats de l'essai précédent (tableau 7). En outre, une mesure de perméabilité à l'air *Pa* a été réalisée, soulignant là aussi la supériorité du câble C-VII du point de vue de la pénétrabilité par le caoutchouc, et donc le meilleur compromis global de propriétés disponible avec le câble de l'invention.

En conclusion, comme le démontrent les différents essais qui précèdent, les câbles de l'invention permettent de réduire de manière notable les phénomènes de fatigue-fretting-corrosion dans les armatures de carcasse des pneumatiques, en particulier des pneumatiques Poids-lourd, et d'améliorer ainsi la longévité de ces pneumatiques.

Bien entendu, l'invention n'est pas limitée aux exemples de réalisation précédemment décrits.

C'est ainsi par exemple que l'âme C0 des câbles de l'invention pourrait être constituée d'un fil à section non circulaire, par exemple déformé plastiquement, notamment un fil de section sensiblement ovale ou polygonale, par exemple triangulaire, carrée ou encore rectangulaire ; l'âme C0 pourrait aussi être constituée d'un fil préformé, de section circulaire ou non, par exemple un fil ondulé, vrillé, tordu en forme d'hélice ou en zig-zag. Dans de tels cas, il faut bien sûr comprendre que le diamètre $d_0$ de l'âme représente le diamètre du cylindre de révolution imaginaire qui entoure le fil d'âme (diamètre d'encombrement), et non plus le diamètre (ou toute autre taille transversale, si sa section n'est pas circulaire) du fil d'âme lui-même. Il en serait de même si l'âme C0 était formée non pas d'un seul fil comme dans les exemples précédents, mais de plusieurs fils assemblés entre eux, par exemple de deux fils disposés parallèlement l'un à l'autre ou bien tordus ensemble, dans une direction de torsion identique ou non à celle de la couche intermédiaire C1.

Pour des raisons de faisabilité industrielle, de coût et de performance globale, on préfère toutefois mettre en oeuvre l'invention avec un seul fil d'âme linéaire conventionnel, de section circulaire.

D'autre part, le fil d'âme étant moins sollicité lors de l'opération de câblage que les autres fils, compte tenu de sa position dans le câble, il n'est pas nécessaire pour ce fil d'employer par exemple des compositions d'acier offrant une ductilité en torsion élevée ; on pourra avantageusement utiliser tout type d'acier, par exemple un acier inoxydable, afin d'aboutir par exemple à un câble d'acier hybride [1+6+11] tel que décrit dans la demande WO98/41682 précitée, comportant un fil en acier inoxydable au centre et 17 fils en acier au carbone autour.

En outre, un (au moins un) fil linéaire d'une des deux couches C1 et/ou C2 pourrait lui aussi être remplacé par un fil préformé ou déformé, ou plus généralement par un fil de section différente de celle des autres fils de diamètre $d_1$ et/ou $d_2$, de manière par exemple à améliorer encore la pénétrabilité du câble par le caoutchouc ou toute autre matière, le diamètre d'encombrement de ce fil de remplacement pouvant être inférieur, égal ou supérieur au diamètre ($d_1$ et/ou $d_2$) des autres fils constitutifs de la couche (C1 et/ou C2) concernée.

Sans que l'esprit de l'invention soit modifié, tout ou partie des fils constituant le câble conforme à l'invention pourrait être constitué de fils autres que des fils en acier, métalliques ou non, notamment des fils en matière minérale ou organique à haute résistance mécanique, par exemple des monofilaments en polymères organiques cristaux liquides tels que décrits dans la demande WO92/12018. L'invention concerne également tout câble d'acier multitorons ("*multi-strand rope*") dont la structure incorpore au moins, en tant que toron élémentaire, un câble à couches conforme à l'invention.

Tableau 1

| Fils | $\phi$ | Fm (N) | At (%) | Rm (MPa) |
|------|--------|--------|--------|----------|
| $F_1$ | 0,200 | 81.7 | 1.8 | 2718 |
| $F_2$ | 0,175 | 62.3 | 2.1 | 2856 |

Tableau 2

| Câble | Fm(N) | At (%) | Rm (MPa) |
|-------|-------|--------|----------|
| C-I | 1173 | 2.7 | 2696 |
| C-II | 1255 | 2.8 | 2750 |

Tableau 3

| Pneu | Câble | $\Delta$Fm(%) | | | |
|------|-------|------|------|------|-------|
| | | C0 | C1 | C2 | Câble |
| P-1 | C-I | 2 | 2 | 3 | 2 |
| P-2 | C-II | 8 | 6 | 5 | 5 |
| P-3 | C-I | 3 | 3 | 4 | 4 |
| P-4 | C-II | 12 | 8 | 5 | 7 |

Tableau 4

| Fil ou Câble | Fm (N) | At (%) | Rm (MPa) |
|--------------|--------|--------|----------|
| $F_3$ | 113 | 1.8 | 2790 |
| C-III | 1310 | 3.3 | 2560 |

Tableau 5

| Câble | *Pa* (u.r.) | *Pa* moyen |
|-------|-------------|------------|
| C-I | 10-17-6 | 11 |
| C-II | 102 - 97 - 102 | 100 |
| C-III | 315-280-305 | 300 |

Tableau 6

| Câble | Fm (N) | At (%) | Rm(MPa) |
|-------|--------|--------|---------|
| C-IV | 1193 | 2.4 | 2661 |
| C-V | 1181 | 2.5 | 2614 |
| C-VI | 1211 | 2.4 | 2702 |

Tableau 7

| Câble | $\sigma_d$ (MPa) | $\sigma_d$ (u.r.) |
|-------|--------|--------|
| C-IV | 765 | 100 |
| C-V | 621 | 81 |
| C-VI | 676 | 88 |

Tableau 8

| Fil ou Câble | Fm (N) | At (%) | Rm (MPa) |
|--------------|--------|--------|----------|
| $F_4$ | 139 | 2.0 | 2824 |
| C-VII | 1312 | 2.4 | 2667 |
| C-VIII | 1275 | 2.5 | 2570 |

Tableau 9

| Câble | $\sigma_d$ (MPa) | $\sigma_d$ (u.r.) | *Pa* (u.r.) |
|-------|--------|--------|--------|
| C-VII | 779 | 126 | 38 |
| C-VIII | 619 | 100 | 100 |

**Revendications**

1. Câble multicouches à couche externe insaturée, utilisable comme élément de renforcement d'une armature de carcasse de pneumatique ou comme élément de renforcement d'articles ou de produits semi-finis en matière plastique et/ou en caoutchouc, comportant une âme (C0) de diamètre $d_0$ entourée d'une couche intermédiaire (C1) de six ou sept fils (M = 6 ou 7) de diamètre $d_1$ enroulés ensemble en hélice selon un pas $p_1$, cette couche intermédiaire (C1) étant elle-même entourée d'une couche externe (C2) de N fils de diamètre $d_2$ enroulés ensemble en hélice selon un pas $p_2$, N étant inférieur de 1 à 3 au nombre maximal $N_{max}$ de fils enroulables en une couche autour de la couche intermédiaire (C1), les fils des couches intermédiaire (C1) et externe (C2) étant enroulés dans le même sens de torsion, ce câble étant **caractérisé en ce qu'**il présente les caractéristiques suivantes ($d_0$, $d_1$, $d_2$, $p_1$ et $p_2$ en mm):

   - (i) $0,14 < d_0 < 0,28$ ;
   - (ii) $0,12 < d_1 < 0,25$ ;
   - (iii) $0,12 < d_2 < 0,25$ ;

- (iv) pour M = 6 : $1,10 < (d_0 / d_1) < 1,40$ ;
  pour M = 7 : $1,40 < (d_0/ d_1) < 1,70$ ;
- (v) $5\,\pi(d_0 + d_1) < p_1 < p_2 < 5\,\pi(d_0 + 2d_1 + d_2)$ .

2. Câble selon la revendication 1, de construction [1+M+N], dont l'âme (C0) est constituée par un seul fil.

3. Câble selon la revendication 2, choisi parmi les câbles de constructions [1+6+10], [1+6+11], [1+6+12], [1+7+11], [1+7+12] ou [1+7+13].

4. Câble selon les revendications 1 ou 2, de construction [1+6+N].

5. Câble selon la revendication 4, de construction [1+6+11].

6. Câble selon l'une quelconque des revendications 1 à 5, vérifiant les relations suivantes:

   - $d_1 = d_2$ ;
   - $5 < p_1 < p_2 < 15$.

7. Câble selon la revendication 6, vérifiant les relations suivantes:

   - $0,18 < d_0 < 0,24$ ;
   - $0,16 < d_1 = d_2 < 0,19$ ;
   - $5 < p_1 < p_2 < 12$ .

8. Câble selon la revendication 7, $p_1$ étant compris entre 5 et 8 mm et $p_2$ étant compris entre 8 et 12 mm.

9. Câble selon l'une quelconque des revendications 1 à 7, **caractérisé en ce qu'**il s'agit d'un câble d'acier.

10. Câble selon la revendication 9, **caractérisé en ce que** l'acier est un acier au carbone.

11. Câble selon la revendication 10, l'acier au carbone ayant un taux de carbone compris entre 0,5% et 1,0%, de préférence entre 0,68% et 0,95% (% en poids d'acier).

12. Câble selon l'une quelconque des revendications 1 à 11, vérifiant la relation:

    $5,3\,n\,(d_0 + d_1) < p_1 < p_2 < 4,7\,\pi\,(d_0 + 2d, + d_2)$.

13. Utilisation d'un câble selon l'une quelconque des revendications 1 à 12 comme élément de renforcement d'articles ou de produits semi-finis en matière plastique et/ou en caoutchouc.

14. Utilisation d'un câble selon l'une quelconque des revendications 1 à 12 comme élément de renforcement d'une armature de carcasse (7) de pneumatique destiné à des véhicules industriels choisis parmi camionnettes, Poids-lourds, engins agricoles ou de génie civil, avions, autres véhicules de transport ou de manutention.

15. Pneumatique Poids-lourd (1) dont l'armature de carcasse (7) comporte un câble conforme à l'une quelconque des revendications 1 à 12.

16. Tissu composite utilisable comme nappe d'armature de carcasse de pneumatique Poids-lourd, comportant une matrice de composition de caoutchouc renforcée d'un câble selon l'une quelconque des revendications 1 à 12.

17. Tissu selon la revendication 16, sa densité de câbles étant comprise entre 40 et 100 câbles par dm de tissu.

18. Tissu selon la revendication 17, la densité de câbles étant comprise entre 50 et 80 câbles par dm de tissu.

19. Tissu selon l'une quelconque des revendications 16 à 18, la largeur ($\ell$) du pont de composition de caoutchouc, entre deux câbles adjacents, étant comprise entre 0,35 et 1 mm.

20. Tissu selon la revendication 19, la largeur ($\ell$) étant comprise entre 0,5 et 0,8 mm.

**21.** Tissu selon l'une quelconque des revendications 16 à 20, la composition de caoutchouc présentant, à l'état vulcanisé, un module sécant en extension M10 qui est inférieur à 8 MPa.

**22.** Tissu selon la revendication 21, la composition de caoutchouc présentant, à l'état vulcanisé, un module M10 compris entre 4 et 8 MPa.

**23.** Pneumatique Poids-lourd dont l'armature de carcasse comporte, à titre de nappe renforçante, au moins un tissu selon l'une quelconque des revendications 16 à 22.

**Patentansprüche**

**1.** Mehrlagiges Seil mit ungesättigter äußerer Lage, das als Verstärkungselement einer Karkassbewehrung eines Luftreifens oder als Verstärkungselement von Gegenständen oder Halbzeugen aus einem Kunststoffmaterial und/ oder aus Kautschuk verwendbar ist, das eine Seele (C0) mit dem Durchmesser $d_0$ umfasst, die von einer Zwischenlage (C1) aus sechs oder sieben Drähten (M = 6 oder 7) mit dem Durchmesser $d_1$, die miteinander zu einer Helix mit einer Schlaglänge $p_1$ gewickelt sind, umgeben ist, wobei diese Zwischenlage C 1 wiederum von einer äußeren Lage (C2) aus N Drähten mit dem Durchmesser $d_2$ umgeben ist, die miteinander zu einer Helix mit einer Schlaglänge $p_2$ gewickelt sind, wobei N um 1 bis 3 kleiner ist als die Maximalzahl $N_{max}$ der Drähte, die in einer Lage um die Zwischenlage (C1) gewickelt werden können, wobei die Drähte der Zwischenlage (C1) und der äußeren Lage (C2) in gleicher Schlagrichtung gewickelt sind, wobei dieses Seil **dadurch gekennzeichnet ist, dass** es die folgenden Merkmale aufweist (do, $d_1$, $d_2$, $p_1$ und $p_2$ in mm):

- (i) $0{,}14 < d_0 < 0{,}28$;
- (ii) $0{,}12 < d_1 < 0{,}25$;
- (iii) $0{,}12 < d_2 < 0{,}25$;
- (iv) für M = 6: $1{,}10 < (d_0/d_1) < 1{,}40$;
  für M = 7: $1{,}40 < (d_0/d_1) < 1{,}70$;
- (v) $5 \pi (d_0 + d_1) < p_1 < p_2 < 5 \pi (d_0 + 2d_1 + d_2)$.

**2.** Seil nach Anspruch 1 mit [1+M+N]-Konstruktion, dessen Seele (C0) aus einem einzigen Draht besteht.

**3.** Seil nach Anspruch 2, das unter den Seilen mit [1+6+10]-, [1+6+11]-, [1+6+12]-, [1+7+11]-, [1+7+12]-und [1+7+13] -Konstruktion ausgewählt ist.

**4.** Seil nach Anspruch 1 oder 2 mit [1+6+N]-Konstruktion.

**5.** Seil nach Anspruch 4 mit [1+6+11]-Konstruktion.

**6.** Seil nach einem der Ansprüche 1 bis 5, das die folgenden Beziehungen erfüllt:

- $d_1 = d_2$;
- $5 < p_1 < p_2 < 15$.

**7.** Seil nach Anspruch 6, das die folgenden Beziehungen erfüllt:

- $0{,}18 < d_0 < 0{,}24$;
- $0{,}16 < d_1 = d_2 < 0{,}19$;
- $5 < p_1 < p_2 < 12$.

**8.** Seil nach Anspruch 7, wobei $p_1$ im Bereich von 5 bis 8 mm und $p_2$ im Bereich von 8 bis 12 mm liegt.

**9.** Seil nach einem der Ansprüche 1 bis 7, **dadurch gekennzeichnet, dass** es sich um ein Stahlseil handelt.

**10.** Seil nach Anspruch 9, **dadurch gekennzeichnet, dass** der Stahl ein Kohlenstoffstahl ist.

**11.** Seil nach Anspruch 10, wobei der Kohlenstoffstahl einen Kohlenstoffgehalt aufweist, der im Bereich von 0,5 bis 1,0 %, vorzugsweise im Bereich von 0,68 bis 0,95 % liegt (Gew.-% des Stahls)

12. Seil nach einem der Ansprüche 1 bis 11, das die folgende Beziehung erfüllt:

$$5,3 \, \pi \, (d_0 + d_1) < p_1 < p_2 < 4,7 \, \pi \, (d_0 + 2d_1 + d_2).$$

13. Verwendung eines Seiles nach einem der Ansprüche 1 bis 12 als Verstärkungselement von Gegenständen oder Halbzeugen aus einem Kunststoffmaterial und/oder aus Kautschuk.

14. Verwendung eines Seiles nach einem der Ansprüche 1 bis 12 als Verstärkungselement einer Karkassbewehrung (7) eines Luftreifens, der für Nutzfahrzeuge vorgesehen ist, die unter Lieferwagen, Lastwagen, Landwirtschaftsmaschinen und Baumaschinen, Flugzeugen, sonstigen Transportfahrzeugen und Förderfahrzeugen ausgewählt werden.

15. Lastwagenreifen (1), dessen Karkassbewehrung (7) ein Seil nach einem der Ansprüche 1 bis 12 enthält.

16. Verbundgewebe, das als Lage der Karkassbewehrung eines Lastwagenreifens verwendbar ist, das eine Matrix aus einer Kautschukzusammensetzung umfasst, die mit einem Seil nach einem der Ansprüche 1 bis 12 verstärkt ist.

17. Gewebe nach Anspruch 16, wobei die Dichte der Seile im Bereich von 40 bis 100 Seilen pro dm Gewebe liegt.

18. Gewebe nach Anspruch 17, wobei die Dichte der Seile im Bereich von 50 bis 80 Seilen pro dm Gewebe liegt.

19. Gewebe nach einem der Ansprüche 16 bis 18, wobei die Breite ($\ell$) des Stegs aus der Kautschukzusammensetzung zwischen zwei benachbarten Seilen im Bereich von 0,35 bis 1 mm liegt.

20. Gewebe nach Anspruch 19, wobei die Breite ($\ell$) im Bereich von 0,5 bis 0,8 mm liegt.

21. Gewebe nach einem der Ansprüche 16 bis 20, wobei die Kautschukzusammensetzung im vulkanisierten Zustand einen Sekantenmodul bei Dehnung M10 aufweist, der kleiner als 8 MPa ist.

22. Gewebe nach Anspruch 21, wobei die Kautschukzusammensetzung im vulkanisierten Zustand einen Modul M10 aufweist, der im Bereich von 4 bis 8 MPa liegt.

23. Lastwagenreifen, dessen Karkassbewehrung als verstärkende Lage mindestens ein Gewebe nach einem der Ansprüche 16 bis 22 enthält.

**Claims**

1. A multi-layer cable having a unsaturated outer layer, usable as a reinforcing element for a tyre carcass reinforcement or as reinforcing element for articles or semi-finished products made of plastics material and/or rubber, comprising a core (C0) of diameter $d_0$ surrounded by an intermediate layer (C1) of six or seven wires (M = 6 or 7) of diameter $d_1$ wound together in a helix at a pitch $p_1$, this intermediate layer (C1) itself being surrounded by an outer layer (C2) of N wires of diameter $d_2$ wound together in a helix at a pitch $p_2$, N being less by 1 to 3 than the maximum number $N_{max}$ of wires which can be wound in one layer about the intermediate layer (C1), the wires of the intermediate (C1) and outer (C2) layers being wound in the same direction of twist, this cable being **characterised in that** it has the following characteristics (do, $d_1$, $d_2$, $p_1$ and $p_2$ in mm):

   - (i) $0.14 < d_0 < 0.28$;
   - (ii) $0.12 < d_1 < 0.25$;
   - (iii) $0.12 < d_2 < 0.25$;
   - (iv) for M = 6: $1.10 < (d_0/d_1) < 1.40$;
     for M = 7: $1.40 < (d_0/d_1) < 1.70$;
   - (v) $5 \, \pi \, (d_0 + d_1) < p_1 < p_2 < 5 \, \pi \, (d_0 + 2d_1 + d_2)$.

2. A cable according to Claim 1, of construction [1+M+N], the core (C0) of which is formed by a single wire.

3. A cable according to Claim 2, selected from among cables of the constructions [1+6+10], [1+6+11], [1+6+12],

**EP 1 200 671 B1**

[1+7+11], [1+7+12] or [1+7+13].

4.  A cable according to Claims 1 or 2, of construction [1+6+N].

5.  A cable according to Claim 4, of construction [1+6+11].

6.  A cable according to any one of Claims 1 to 5, which satisfies the following relationships:

    - $d_1 = d_2$;
    - $5 < p_1 < p_2 < 15$.

7.  A cable according to Claim 6, which satisfies the following relationships:

    - $0.18 < d_o < 0.24$;
    - $0.16 < d_1 = d_2 < 0.19$;
    - $5 < p_1 < p_2 < 12$.

8.  A cable according to Claim 7, $p_1$ being between 5 and 8 mm and $p_2$ being between 8 and 12 mm.

9.  A cable according to any one of Claims 1 to 7, **characterised in that** it is a steel cable.

10. A cable according to Claim 9, **characterised in that** the steel is a carbon steel.

11. A cable according to Claim 10, the carbon steel having a carbon content of between 0.5% and 1.0%, preferably between 0.68% and 0.95% (% by weight of steel).

12. A cable according to any one of Claims 1 to 11, which satisfies the relationship:

    $$5.3 \, \pi \, (d_0 + d_1) < p_1 < p_2 < 4.7 \, \pi \, (d_0 + 2d_1 + d_2).$$

13. The use of a cable according to any one of Claims 1 to 12 as a reinforcing element for articles or semi-finished products of plastics material and/or of rubber.

14. The use of a cable according to any one of Claims 1 to 12 as a reinforcing element of a carcass reinforcement (7) for a tyre intended for industrial vehicles selected from among vans, heavy vehicles, agricultural machinery or construction machinery, aircraft and other transport or handling vehicles.

15. A heavy-vehicle tyre (1), the carcass reinforcement (7) of which comprises a cable according to any one of Claims 1 to 12.

16. A composite fabric usable as a carcass reinforcement ply for a heavy-vehicle tyre, comprising a matrix of rubber composition reinforced by a cable according to any one of Claims 1 to 12.

17. A fabric according to Claim 16, its cable density being between 40 and 100 cables per dm of fabric.

18. A fabric according to Claim 17, the cable density being between 50 and 80 cables per dm of fabric.

19. A fabric according to any one of Claims 16 to 18, the width ($\ell$) of the bridge of rubber composition, between two adjacent cables, being between 0.35 and 1 mm.

20. A fabric according to Claim 19, the width ($\ell$) being between 0.5 and 0.8 mm.

21. A fabric according to any one of Claims 16 to 20, the rubber composition having, when vulcanised, a secant tensile modulus M10 which is less than 8 MPa.

22. A fabric according to Claim 21, the rubber composition having, when vulcanised, a modulus M10 which is between 4 and 8 MPa.

**23.** A heavy-vehicle tyre, the carcass reinforcement of which comprises, as reinforcing ply, at least one fabric according to any one of Claims 16 to 22.

# Fig. 1

# Fig. 2

# Fig. 3